# EUROPÄISCHE PATENTSCHRIFT

(11) **EP 0 937 400 B1**
(45) Veröffentlichungstag und Bekanntmachung des Hinweises auf die Patenterteilung: **29.03.2000**
(21) Anmeldenummer: 98102565.3
(22) Anmeldetag: 13.02.1998
(51) Int. Cl.: A21B 3/04, F24C 15/32

(54) **Verfahren zum umweltschonenden und gefahrlosen Backen oder Garen von Lebensmitteln**
Process for safe and pollution-free baking and cooking of food
Procédé de cuisson non-polluant et sans danger des aliments

(43) Veröffentlichungstag der Anmeldung: 25.08.1999
(73) Patentinhaber: eloma GmbH Grossküchentechnik, 82212 Maisach (DE)
(72) Erfinder: Helm, Peter, Dipl.-Ing., 82216 Maisach (DE)
(74) Vertreter: Strobel, Wolfgang, Dipl.-Ing.

(56) Entgegenhaltungen:
- EP-A- 0 319 673
- EP-A- 0 624 759

## Beschreibung

Die vorliegende Erfindung betrifft ein Verfahren zum umweltschonenden und gefahrlosen Backen oder Garen von Lebensmitteln, nach dem Oberbegriff des Anspruchs 1.

Verfahren zum Backen oder Garen werden in der Großküchentechnik, anders als in privaten Haushalten mittels Back- oder Garverfahren in Geräten durchgeführt, die als Back-, Heißluft-, Kombidampfgeräte oder Dämpfer ausgebildet sind. Während des Backens oder Garens entstehen durch Beschwadung und/oder durch die Eigenfeuchtigkeit des Back- oder Garprodukts erhebliche Dampfmengen, die nach dem Garende im Garraum bzw. im Gerät vorliegen.

Bei den bisherigen Verfahren bzw. Geräten wird nach Beenden des Back- oder Garvorganges die Zugangstüre geöffnet, so daß die in dem Gerät oder Garraum enthaltene Dampfmenge schlagartig bzw. annähernd schlaggartig entweicht.

Da es sich nicht nur um erhebliche Dampfmengen handelt, sondern auch in der Regel um heißen bzw. überhitzten Dampf, besteht die große Gefahr von Verbrühungen der Bedienungsperson insbesondere im Gesicht- oder Armbereich. Die Gefahr für die Bedienungsperson wird deshalb heutzutage noch erhöht, da immer mehr schlecht geschultes und eingewiesenes Personal bzw. uneingewiesenes Hilfspersonal die Geräte bedient.

Um diesen Nachteil zu vermeiden, ist es aus dem Stand der Technik bekannt, einen zweistufigen Türverschluß zu verwenden. Die erste Öffnungsstufe des Verschlusses erlaubt eine kontrollierte und gerichtete Dampfentweichung aus dem Garraum. Hierbei wird die Tür etwa 10 bis 20 mm geöffnet und in dieser Position mechanisch gehalten. Durch eine weitere Bewegung des Verschlußgriffes kann die Tür anschließend vollständig geöffnet werden.

Dieser Hilfsmechanismus einer zweistufigen Türöffnung kann jedoch auch durch entsprechend schnelles Betätigen der Sperre überwunden werden, so daß hier keine Sicherheit gegenüber entsprechenden Verbrühungsgefahren geschaffen ist.

Nicht nur bei diesem Hilfsmechanismus sondern auch ohne diesen Hilfsmechanismus entstehen durch das immer wiederkehrende schlagartige Dampfentweichen erhebliche umweltbelastende Probleme. Zunächst führen die in den Küchenraum ungehindert entweichenden Dämpfe relativ schnell zur erheblichen Beeinträchtigung des Raumklimas und des darin arbeitenden Personals.

Die Aufstellräume derartiger Geräte nehmen aufgrund des deutlich höheren Feuchtegehalts der Raumluft ebenfalls langfristig Schaden. Dies äußerst sich beispielsweise im Abblättern von Farbe und/oder durch Schimmelbildungen an den Wänden und Decken.

Weiterhin ist der Nachteil vorhanden, daß trotz großzügig bemessener Absaugeinrichtungen die schlagartig auftretenden großen Dampfmengen ebenfalls nur ungenügend bewältigt werden können bzw. entsprechend groß dimensioniert werden müssen, wodurch sie nicht nur teuer in der Herstellung sondern auch in der Wartung sind.

Aus der EP 624 759 A1 ist ein Dampfgerät bekannt, bei dem während des Backens oder Garens erhebliche, gegebenenfalls überhitzte Dampfmengen entstehen und sich bis Ende des Back- bzw. Garvorganges im Gerät befinden. Einige Minuten vor dem Ende des Garens wird die Dampferzeugung unterbrochen und Steuerungseinrichtungen betätigen eine Vorrichtung zur Öffnung des Ventils einer Austrittsöffnung, durch die der Dampf entweichen kann.

Aus der EP 319 673 A1 ist eine Vorrichtung zur Steuerung eines mit Dampf betriebenen Gargerätes und ein Verfahren zum Betreiben eines solchen Gerätes bekannt, bei der bzw. dem gegen Ende der Garphase über eine steuerbare Dampf austrittsöffnung aus dem Garraum Dampf zur Saugseite eines Gebläses abgeführt und gleichzeitig über eine steuerbare Luftzuführungsöffnung aus dem Druckkanal des Gebläses Luft dem Garraum zugeführt wird. Auf diese Weise soll der im Garraum befindliche Dampf soweit abgebaut werden, daß beim Öffnen der Backofentür kein störender Dampf mehr austritt.

Nachteilig bei dem Verfahren bzw. den Geräten des Standes der Technik ist, daß eine sowohl zeitlich als auch mengenmäßig exakte Ausbringung des Dampfes nicht gewährleistet ist. Gemäß EP 624 759 A1 beginnt das Dampfablassen einige Minuten vor dem Ende des Garens, was einerseits eine sehr vage Angabe ist und andererseits eine zeitgenaue und vollständige Ausbringung des Dampfes nicht sicherstellt. Bei dem Gerät gemäß EP 0 319 673 A1 wird der Dampferzeuger bis zum tatsächlichen Programmende abgeschaltet und der in der Backofenmuffel befindliche Dampf soweit abgebaut, daß beim Öffnen der Backofentür kaum noch Dampf austritt. Dies zeigt, daß in jedem Fall noch Dampf zurückbleibt, der dann beim Öffnen der Tür schlagartig austritt.

Der vorliegenden Erfindung liegt deshalb die Aufgabe zugrunde, ein Verfahren der eingangs genannten Art zu schaffen, mit dem eine minimale Zeitdauer bei gleichzeitiger optimaler Dampfausbringung erreicht wird.

Diese Aufgabe wird durch die kennzeichnenden Merkmale des Anspruchs 1 gelöst.

Erfindungsgemäß leitet die Programmsteuerung des Gerätes die Entfeuchtung in Abhängigkeit von der ermittelten Garraum-Feuchtigkeit vor Beendigung des des Back- oder garvorganges ein, wobei die Dauer der Entfeuchtung von der ermittelten Garraum-Feuchtigkeit abhängt.

Mit großen Vorteil hinsichtlich umweltschonender und gefahrloser Back- und Garvorgänge wird der Zugang zum Gerät während des Back- oder Garvorganges so lange verschlossen gehalten, bis die Entfeuchtung abgeschlossen ist. Dies kann durch entsprechende programmgesteuerte Maßnahmen in Zusammenarbeit mit entsprechender gesteuerter Türverschließeinrichtungen erfolgen. Dadurch wird auch vermieden, daß zu beliebigen Zeitpunkten des Back- oder Garvorganges der Zugang geöffnet wird und damit die darin befindliche Dampfmenge wie bisher entweichen kann.

Das erfindungsgemäße Verfahren weist weiterhin den Vorteil auf, daß die Programmsteuerung unmittelbar nach Back- bzw. Garende den Verschluß des Gerätezugangs bzw. der Gerätetür zu dessen Öffnung freigibt.

Das Entfeuchten des Garraumes kann beispielsweise über eine zusätzliche Absaugvorrichtung erfolgen, die entsprechend programmgesteuert zum gewünschten Zeitpunkt in Betrieb gesetzt wird.

Alternativ erfolgt die Entfeuchtung über einen Austauch der Dampfatmosphäre im Garraum mittels eingeführter Frischluft. Diese wird über einen Zuführkanal, der im dem Garraumzugang entgegengesetzten Wandabschnitt des Gargeräts mündet, zugeführt und mittels eines Lüfterrades oder Ventilators im Garraum verteilt. Durch den dadurch entstehenden höheren Druck wird der Dampf über einen sich beispielsweise am Boden des Gargeräts befindlichen Ablaßstutzen aus dem Gerät herausgedrängt und vorzugsweise kondensiert.

Mit der vorliegenden Erfindung wird somit nicht nur ein Höchstmaß an Arbeitsschutz bei der Bedienung derartiger Geräte erreicht, sondern auch der Raum in dem derartige Geräte aufgestellt sind, nachhaltig vor Schäden geschützt.

## Patentansprüche

1. Verfahren zum umweltschonenden und gefahrlosen Backen oder Garen von Lebensmitteln in programmgesteuerten Back-, Heißluft-, Kombidampfgeräten oder Dämpfern, wobei während des Backens oder Garens erhebliche, gegebenenfalls überhitzte Dampfmengen entstehen und sich bis Ende des Back- bzw. Garvorganges im Gerät befinden und stets eine Entfeuchtung des Garraumes vor Beendigung des Back- oder Garvorganges durchgeführt wird,
dadurch gekennzeichnet,
daß die Programmsteuerung des Gerätes die Entfeuchtung in Abhängigkeit von der ermittelten Garraum-Feuchtigkeit vor Beendigung des Back- oder Garvorganges einleitet, wobei die Dauer der Entfeuchtung von der ermittelten Garraum-Feuchtigkeit abhängt.

2. Verfahren nach Anspruch 1, dadurch gekennzeichnet, daß der Zugang zum Gerät so lange verschlossen bleibt, bis die Entfeuchtung abgeschlossen ist.

3. Verfahren nach Anspruch 2, dadurch gekennzeichnet, daß die Programmsteuerung unmittelbar nach Back- bzw. Garende den Verschluß des Gerätezugangs bzw. der Gerätetür zu dessen Öffnung freigibt.

## Claims

1. Method of baking or cooking food in an environment-protecting and safe way in program-controlled baking-, hot air-, combined steam devices or steam cooking devices, wherein considerable, possibly overheated amounts of steam are produced during baking or cooking and remain in the device until the baking or cooking process, respectively, has finished, and wherein a removal of dampness from the cooking space is always performed prior to the termination of the baking or cooking process, respectively,
characterized in
that the program-control of the device initiates the removal of dampness, as a function of the dampness in the cooking space determined, prior to the termination of the baking or cooking process, the duration of removal of dampness depending on the dampness in the cooking space determined.

2. Method according to claim 1, characterized in that the access to the device remains closed until the removal of dampness has been terminated.

3. Method according to claim 2, characterized in that the program-control releases the closure of the access to the device or the door of the device, respectively, to be opened directly after the baking or cooking process, respectively, has been terminated.

## Revendications

1. Procédé écologique non polluant et inoffensif de cuisson ou de rôtissage de produits alimentaires dans des appareils programmables à vapeur, combinés ou autocuiseurs, ou à air chaud ou formant cuiseurs rôtisseurs, dans lequel, pendant la cuisson ou le rôtissage, se forment des quantités importantes de vapeur, le cas échéant surchauffée, qui se trouvent dans l'appareil jusqu'à la fin du processus de cuisson ou de rôtissage, et dans lequel on effectue toujours une déshumidification de l'intérieur de l'espace de cuisson avant la fin du processus de cuisson ou de rôtissage,
caractérisé en ce que
la programmation de l'appareil déclenche la déshumidification en fonction de l'humidité déterminée de l'espace de cuisson avant la fin du processus de cuisson ou de rôtissage, la durée de la déshumidification étant fonction de l'humidité déterminée de l'espace de cuisson.

2. Procédé selon la revendication 1 caractérisé en ce que l'accès à l'appareil reste fermé aussi longtemps que la déshumidification n'est pas terminée.

3. Procédé selon la revendication 2 caractérisé en ce que la programmation libère le système de fermeture de l'accès de l'appareil ou la porte de l'appareil immédiatement après la fin de la cuisson ou du rôtissage.
